# EUROPEAN PATENT SPECIFICATION

(11) **EP 0 741 676 B1**
(45) Date of publication and mention of the grant of the patent: **27.05.1998**
(21) Application number: 95908059.9
(22) Date of filing: 16.01.1995
(51) Int. Cl.: C03C 25/02

(54) **GLASS FIBER SIZING COMPOSITIONS, SIZED GLASS FIBERS AND METHODS OF REINFORCING POLYMERIC MATERIALS USING THE SAME**
GLASFASERSCHLICHTEZUSAMMENSETZUNGEN, GESCHLICHTETE GLASFASERN UND VERFAHREN ZUR VERSTÄRKUNG VON POLYMEREN MATERIALIEN
COMPOSITIONS D'ENCOLLAGE DE FIBRES DE VERRE, FIBRES DE VERRE ENCOLLEES ET PROCEDES DE RENFORCEMENT DE MATERIAUX POLYMERES A L'AIDE DE CES COMPOSITIONS

(30) Priority: 27.01.1994 US 186963
(43) Date of publication of application: 13.11.1996
(73) Proprietor: PPG INDUSTRIES, INC., Pittsburgh Pennsylvania 15272 (US)
(72) Inventor: KLETT, Michael, Walter, Pittsburgh, PA 15237 (US)
(74) Representative: Fleischer, Holm Herbert, Dr.
(86) International application number: PCT/US95/00615
(87) International publication number: WO 95/20549

(56) References cited:
- EP-A- 0 201 691
- WO-A-93/01235
- US-A- 4 637 956
- US-A- 5 038 555
- US-A- 5 085 938

## Description

### Field of the Invention

The present invention relates to sizing compositions which may be applied to glass fibers, sized glass fibers and methods of reinforcing polymeric materials using the same and, more particularly, to aqueous sizing compositions for application to glass fibers for use in reinforcing thermosetting polymeric composites, such as filament wound composites or pultrusions.

### Background of the Invention

Glass fibers are typically produced by drawing molten glass at a high rate of speed from tips of small orifices in a precious metal device or bushing. During the forming and subsequent mechanical and treatment processes, the glass fibers may be broken by contact with each other and processing equipment (i.e., a process known as filamentation). These broken glass fibers (fuzz) may accumulate on processing equipment and/or produce an undesirable nonuniform surface on polymeric articles to which the glass fibers are added.

To protect the glass fibers from interfilament abrasion, a sizing composition is applied to the surface of the glass fibers during the forming process. Typical sizing compositions include components such as film-formers, lubricants, coupling agents and emulsifiers. U.S. Patent No. 4,637,956 discloses a sizing composition which includes an epoxy polyurethane copolymer or a polyepoxide resin with blocked polyisocyanate functionality, and one or more organo coupling agents. Generally, the sizing composition is applied to a glass fiber strand subsequent to the drawing process and prior to gathering of a plurality of continuous strands on a forming package. The forming packages are dried to remove moisture and cure the sizing composition.

Glass fibers may be incorporated into polymeric materials by filament winding, pultrusion, and other processes for forming high strength glass fiber reinforced molding composites. Pultruded profiles are commonly used in corrosion resistant applications in which high strength and weather-ability are desired. Examples of pultruded products include architectural and automotive products, ladder rails, sucker rods, antennas, railings, conduits, I-beams, H-beams, angles, insulator rods, floor gratings and roadway delineators.

The strength of molded products formed from materials produced by the above processes is dependent in part upon the degree of contact between the polymer and fiber glass. The measure of the flowability of the polymeric matrix material through the glass fiber mass to obtain essentially complete encapsulation of the entire surface of each glass strand by the polymeric material is referred to as "wet-out". If the wet-out is incomplete during this initial processing, subsequent processing and the surface characteristics of the final composite may be adversely effected. For example, poor wet-out may manifest itself as low composite strengths and the appearance of white fibers.

It is desirable to have high degrees of wet-out and compatibility with the thermosetting matrix resin in applications such as those discussed above.

### Summary of the Invention

The present invention overcomes many drawbacks of conventional sizing compositions by providing an aqueous sizing composition which may be readily applied to at least one glass fiber to provide at least one of the following advantages: good solubility in the thermosetting matrix resin for high wet-out, good compatibility with the thermosetting matrix resin, good clarity in cured polymer pultrusions, as well as other advantages.

One aspect of the present invention is an aqueous sizing composition for at least one glass fiber comprising a non-ionic urethane-modified epoxy thermosetting copolymer; a water soluble, dispersible or emulsifiable epoxy film-forming polymer; an emulsifying agent; an organo functional silane coupling agent; a fiber lubricant; and water in an amount sufficient for application of the sizing composition to at least one glass fiber.

Another aspect of the present invention is a method of making a reinforcement for a variety of thermosetting resins, such as epoxy, polyester and vinyl ester resins, having improved strength. The above-discussed aqueous sizing composition is applied to at least a portion of a surface of each of a plurality of glass fibers, which are then dried to form a reinforcement for a thermosetting polymer.

### Brief Description of the Drawing

The foregoing summary, as well as the following detailed description of the preferred embodiment, will be better understood when read in conjunction with the appended drawing. In the drawing:

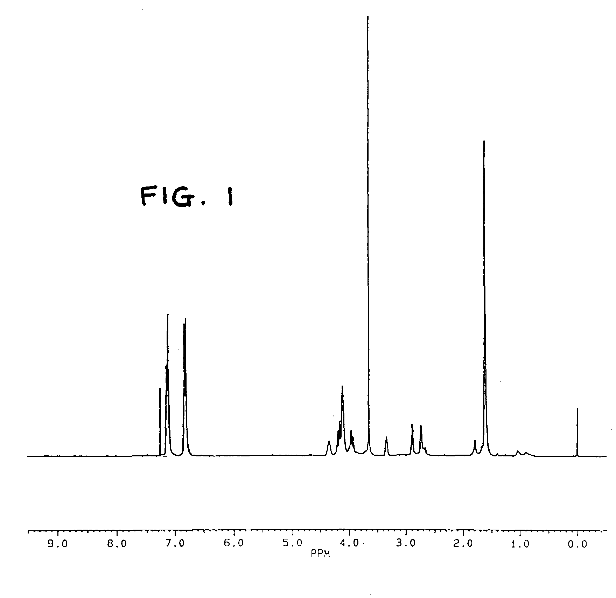

Fig. 1 is a proton nuclear magnetic resonance ('HNMR) curve for an aqueous emulsion of a non-ionic urethane-modified epoxy thermosetting copolymer which is commercially available under the trade designation Epi-Rez CMD W60-5520 from Shell Chemical, in accordance with the present invention.

### Detailed Description of the Preferred Embodiment

The aqueous sizing composition of the present invention provides glass fiber strands having high wet-out characteristics. Articles formed from thermosetting polymeric materials incorporating glass fibers treated with the sizing composition of the present invention have improved strength and clarity.

The aqueous sizing composition of the present invention comprises a non-ionic urethane-modified epoxy thermosetting copolymer, preferably present in the form of an aqueous emulsion or dispersion. Generally, the non-ionic urethane-modified epoxy thermosetting copolymer has an epoxide equivalent weight of about 175 to about 760 and may comprise about 50 to about 99 weight percent and, more preferably, about 60 weight percent of a water-based emulsion which preferably contains no organic solvents.

The presently preferred non-ionic emulsion of a urethane-modified epoxy thermosetting copolymer is Epi-Rez CMD W60-5520, which is commercially available from Shell Chemical. This material is a non-ionic, aqueous dispersion of a urethane-modified epoxy resin having an epoxide equivalent weight of 540 and 60 weight percent solids. The dispersion is thixotropic and contains no organic solvents. CMD W60-5520 can be cured through epoxy functionality and/or hydroxyl functionality. The dispersion has a viscosity of about 12,000 centipoise at 25°C as measured using a Brookfield Model RVT, No. 5 spindle at 10 rpm. The dispersion has a density of about 1.1 g/cm³ (9.2 lb./gal), an average particle size of about 2 microns, a pH of about 4.0 and a vapor pressure at 20°C of less than about 20 mm Hg. A proton nuclear magnetic resonance ('HNMR) curve for Epi-Rez CMD W60-5520 is shown in Fig. 1. The 'HNMR was performed on a Bruker 300 MHz proton NMR spectrometer with a zero reference of tetramethylsilane (TMS), an ambient sample temperature and with CDCL₃ solvent.

As presently preferred, the non-ionic urethane-modified epoxy thermosetting resin comprises about 10 to about 60 weight percent of the sizing composition on a non-aqueous basis and, more preferably, about 36 to about 55 weight percent. One of ordinary skill in the art would understand that one or a plurality of non-ionic urethane-modified epoxy thermosetting resins or emulsions thereof may be used in keeping with the spirit and scope of the present invention.

The aqueous sizing composition of the present invention also comprises a water soluble, dispersible or emulsifiable epoxy film-forming polymer. Suitable epoxy film-forming polymers contain at least one oxirane ring, as set forth below in formula (I):

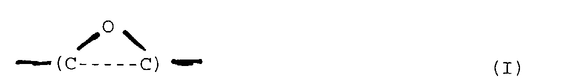

Examples of such epoxy film-forming polymers include reaction products of a halohydrin and a hydroxyl compound, such as a phenol or polyhydroxy alcohol. One group of suitable epoxy compounds may be obtained by the reaction of a stoichiometric excess of an epihalohydrin, such as epichlorohydrin, with a polyhydric phenol such as 2,2-bis(4-hydroxyphenol)propane (bisphenol-A) to form a diglycidyl ether of bisphenol-A. Other examples of suitable polyhydric phenols include bis(hydroxy phenyl) methane, hydroquinone and resorcinol. Examples of useful hydroxyl compounds include glycol, polyoxyalkylene glycol, sorbitol, glycerol, 4-isopropylidene bis(2,6-dibromophenol), dihydroxybenzene, 1,1,2,2-tetra(p-hydroxy phenyl)-ethane, 1,4-butane diol, linoleic dimer acids and 1,1,3-tris(p-hydroxy phenyl)-propane. Non-limiting examples of suitable bisphenol-A and bisphenol-F compounds are Epi-Rez CMD 35201 and Araldite® XU GY 281, respectively.

Other epoxy film-forming polymers which may be used in the sizing composition of the present invention may be produced from aliphatic glycidyl ethers, the reaction of monoepoxy compounds with themselves, or other epoxy generating compounds, for example unsaturated monoepoxy compounds which may be homopolymerized to produce a polyepoxy polymer such as a poly(allyl glycidyl ether).

Examples of suitable epoxy film-forming polymers include EPON 826 and EPON 880 epoxy resins prepared from bisphenol-A and epichlorohydrin, which are commercially available from Shell Chemical. Other examples of useful epoxy film-forming polymers are set forth in U.S. Patent No. 4,752,527 of Sanzero et al.. One of ordinary skill in the art would understand that one or a plurality of epoxy film-forming polymers may be used in the sizing composition of the present invention.

The epoxy film-forming polymer preferably has an epoxy equivalent weight of about 175 to about 760 and, more preferably, is an epoxy resin having a low epoxy equivalent weight of about 180 to about 220. The epoxy equivalent weight or epoxide equivalent is defined as the weight of resin in grams which contains one gram equivalent of epoxy.

As presently preferred, the epoxy film-forming polymer comprises about 10 to about 55 weight percent of the sizing composition on a non-aqueous basis and, more preferably, about 18 to about 37 weight percent. The ratio on a non-aqueous basis of non-ionic urethane-modified epoxy thermosetting copolymer to epoxy film-forming polymer is generally about 30:70 to about 80:20 by weight and, more preferably, about 50:50 to about 75:25.

The aqueous sizing composition of the present invention also comprises at least one emulsifying agent for emulsifying the epoxy film-forming polymer. The epoxy film-forming polymer is preferably emulsified with a combination of surfactants, which may include a polyoxyalkylene block copolymer such as a polyoxypropylene-polyoxyethylene copolymer, an ethoxylated alkyl phenol and/or a polyoxyethylated vegetable oil. An example of a suitable polyoxypropylene-polyoxyethylene copolymer is a condensate of ethylene oxide with hydrophobic bases formed by condensation with propylene oxide with propylene glycol commercially available as PLURONIC™ F-108 from BASF Corporation of Parsippany, New Jersey. Examples of useful ethoxylated alkyl phenols include ethoxylated octylphenoxyethanol, phenoxy polyethylene-oxy(ethanol), phenoxy(ethyleneoxy)ethanol and nonyl phenoxy poly(ethyleneoxy)ethanol. An example of a commercially available ethoxylated octylphenoxyethanol is IGEPAL CA-630 from GAF Corporation of Wayne, New Jersey. An example of a polyoxyethylated vegetable oil is EMULPHOR EL-719, which is commercially available from GAF Corp.

Other examples of suitable emulsifying agents include non-ionic epoxide polyols such as NOVEPOX™ or Prox E 117, which are commercially available from Synthron, Inc.

As presently preferred, the emulsifying agent is a blend of about 1:1 to about 4:1 of a polyoxypropylene-polyoxyethylene copolymer (PLURONIC™ F-108) and an ethoxylated octylphenoxyethanol (IGEPAL CA-630). More preferably, the ratio of PLURONIC™ F-108 to IGEPAL CA-630 is about 2:1. Generally, the emulsifying agent comprises about 5 to about 25 weight percent of the sizing composition on a non-aqueous basis and, more preferably, about 15 to about 20 weight percent.

The sizing composition of the present invention comprises at least one, and preferably a mixture of three, organo functional silane coupling agents. The organo functional silane coupling agent has a reactive moiety on the compound, such as an epoxy, vinyl, acrylate, methacrylate or amino group. As presently preferred, the organo functional silane coupling agent is a mixture of epoxy (preferably A-187 gamma-glycidoxypropyltri-methoxysilane), methacrylate (preferably A-174 gamma-methacryloxypropyltrimethoxysilane) and amino silane (preferably A-1100 gamma-aminopropyltriethoxysilane) coupling agents, each of which is commercially available from Union Carbide Corporation. Other examples of amino silane coupling agents are set forth in U.S. Patent No. 4,374,177. Other suitable organo silane coupling agents for use in the aqueous sizing composition of the present invention will be evident to those of ordinary skill in the art in view of the foregoing disclosure. Also, one of ordinary skill in the art would understand that one, two or more than two organo functional silane coupling agents may be used in keeping with the spirit and scope of the present invention.

The organo functional silane coupling agent may comprise about 5 to about 25 weight percent of the sizing composition on a non-aqueous basis. Preferably, the sizing composition comprises about 6 to about 13 weight percent gamma-methacryloxypropyltrimethoxysilane, zero to about 8 weight percent gamma-glycidoxypropyltrimethoxysilane and about 0.1 to about 1.5 weight percent gamma-aminopropyltriethoxysilane on a non-aqueous basis. More preferably, about 7 to about 11 weight percent gamma-methacryloxypropyltrimethoxysilane, 3 to about 5 weight percent gamma-glycidoxypropyltrimethoxysilane and about 0.3 to about 1.0 weight percent gamma-aminopropyltriethoxysilane on a non-aqueous basis are included in the sizing composition.

The fiber lubricant may be any cationic, non-ionic or anionic glass fiber lubricant compatible with the other additives which reduces the interfilament abrasion between the fibers. As presently preferred, the fiber lubricant is selected from an amine salt of a fatty acid (which may, for example, include a fatty acid moiety having 12 to 22 carbon atoms and/or tertiary amines having alkyl groups of 1 to 22 atoms attached to the nitrogen atom ), alkyl imidazoline derivative (such as may be formed by the reaction of fatty acids with polyalkylene polyamines), acid solubilized fatty acid amide (for example, saturated or unsaturated fatty acid amides having acid groups of 4 to 24 carbon atoms such as stearic amide) and acid solubilized polyunsaturated fatty acid amide.

More preferred are the fiber glass lubricants selected from a condensate of a fatty acid and polyethyleneimine and an amide substituted polyethyleneimine, such as Emery 6717, a partially amidated polyethylene imine commercially available from Henkel Corporation of Kankakee, Illinois. Other examples of suitable Emery fiber lubricants are the products designated 6760 and 4046D. Preferably, the fiber lubricant comprises about 0.05 to about 0.5 weight percent, and more preferably about 0.05 to about 0.18 weight percent, of the sizing composition on a non-aqueous basis .

The sizing composition may also include an aqueous- or non-aqueous-based plasticizer. Examples of suitable non-aqueous-based plasticizers include phthalates, such as di-n-butyl phthalate; trimellitates, such as trioctyl trimellitate; and adipates, such as dioctyl adipate. An example of an aqueous-based plasticizer is Carbowax 400, a polyethylene glycol which is commercially available from Union Carbide Co. of Danbury, Connecticut. The preferred plasticizer is di-n-butyl phthalate. The amount of plasticizer may be about 0 to about 10 weight percent of the sizing composition on a non-aqueous basis. Preferably, the amount of plasticizer is about 3 to about 5 weight percent of the sizing composition on a non-aqueous basis.

The aqueous sizing composition may further comprise an organic acid in an amount sufficient to provide the aqueous sizing composition with a pH of about 3 to about 5.5. Non-limiting examples of organic acids suitable for use in the present invention include mono- and polycarboxylic acids and anhydrides thereof, such as acetic, formic, propionic, caprioc, lactic, benzoic, pyruvic, oxalic acid, maleic, fumaric, acrylic, methacrylic acids and mixtures thereof.

Water (preferably deionized) may be included in the aqueous sizing composition in an amount sufficient for application of the sizing composition to at least one glass fiber. Preferably, the weight percentage of solids is about 1 to about 10 weight percent of the aqueous sizing composition and, more preferably, about 4 to about 5 weight percent. The total amount in weight percent of the non-aqueous components using a basis excluding water generally equals about 100 percent. On a weight basis including water, the total amount of non-aqueous and aqueous components is also about 100 percent.

The aqueous sizing composition of the present invention may be prepared by any suitable method well known to those of ordinary skill in the art. Preferably, each component is diluted in deionized water in a separate tank and well mixed before being combined with the other components in a main mixing tank. The organo functional silane coupling agent(s) may be at least partially hydrolyzed by reaction with the organic hydrocarbon acid in the presence of water. After each of the premixed ingredients is added to the main mix tank, sufficient water is added to provide the aqueous sizing composition with a total solids content of about 1 to about 10 weight percent.

The aqueous sizing composition of the present invention may be applied to any type of fiberizable glass composition known to those of ordinary skill in the art. Nonexclusive examples of suitable fiberizable glass compositions include "E-glass", "621-glass", "A-glass", "C-glass", "S-glass" and lower free fluorine and or boron derivatives thereof. "E-glass" is the preferred glass composition for use in the present invention.

Preferably, the aqueous sizing composition of the present invention is applied to green glass having a refractive index of about 1.555 during the formation of the glass fibers. The glass fibers typically have diameters ranging from about 2.6 x 10⁻³ to about 2.5 x 10⁻² millimeters (mm) (about 10.3 x 10⁻⁵ to about 97.5 x 10⁻⁵ inches) or more, and preferably about 1.3 x 10⁻² to about 2.3 x 10⁻² mm (about 50 x 10⁻⁵ to about 90 x 10⁻⁵ inches) for fibers to be used in pultruded products. The glass fibers may be produced as direct draw or multi-end rovings. The direct draw process is generally used to produce K through T diameter fibers, such as T-113, T-250 and K-675. Multi-end rovings are formed from a plurality of fibers, each fiber typically having a diameter of 1.3 x 10⁻² mm (about 50 x 10⁻⁵ inches), and are assembled by a conventional roving process to produce a roving having the desired number of fibers therein.

The aqueous sizing composition may be applied by contacting at least a portion of each glass fiber emanating from a bushing with a roller-type applicator bearing the sizing composition or by any method well known to those of ordinary skill in the art.

The fibers having the sizing composition applied thereto may be gathered together to form a strand of a plurality of fibers. The strand may be wound onto a forming package placed on a rotating collet. The forming package may be removed from the collet and dried in an oven at a temperature of about 104°C (220°F) to about 149°C (300°F) for about 10 to about 13 hours to produce glass fiber strands having a dried residue of the sizing composition thereupon. The drying temperature will depend upon such variables as the percentage of solids in the sizing composition, components of the sizing composition and type of glass fiber. The sizing composition provides glass fiber strand having about 0.3 to about 2.0 weight percent of the dried sizing composition on the strand based upon total weight of the glass and dried sizing composition.

The strands may be transferred from the forming package and combined with a plurality of other strands to form a roving. The roving may be used in the form of continuous strands, woven glass fiber strand mat or chopped glass fibers to reinforce a thermosetting polymer, as desired, by any method known in the art, for example by pultrusion, filament winding and panel formation processes.

Glass fibers having the sizing composition of the present invention applied thereto may be used to reinforce any thermosetting polymer, including but not limited to polyesters, vinyl esters and epoxies. Nonexclusive examples of suitable thermosetting polymers include orthophthalic and isophthalic polyesters; modified polyesters such as methyl methacrylate, neopentylglycol and acrylic modified derivatives thereof; vinyl esters such as bisphenol-A or epoxy novolak type; and epoxy polymers such as EPON 826 (an epoxy prepared from bisphenol-A and a comonomer such as epichlorohydrin).

For pultrusion applications, continuous rovings are impregnated in the desired resin mix and pulled through a heated die having a desired profile to cure the composite. Generally, about 50 to about 80 weight percent of glass fiber is used to prepare pultruded products, based on the total weight of the resin matrix and glass fibers.

The present invention will now be illustrated by the following specific, non-limiting example.

### EXAMPLE

Each of the components in the amounts set forth in Table 1 was mixed to form an aqueous sizing composition according to the present invention.

**TABLE 1**

| COMPONENT | WEIGHT OF COMPONENT (GRAMS) PER GALLON OF AQUEOUS SIZING COMPOSITION ON NON-AQUEOUS BASIS | WEIGHT PERCENT OF COMPONENT OF SIZING COMPOSITION ON NON-AQUEOUS BASIS |
|---|---|---|
| EPI-REZ CMD W60-5520 | 126.36 | 38.77 |
| EPON 880 | 67.94 | 34.75 |
| PLURONIC F-108 | 10.07 | 5.15 |
| IGEPAL CA-630 | 5.08 | 2.60 |
| A-174 | 21.9 | 9.30 |
| A-187 | 9.12 | 3.78 |
| A-1100 | 2.18 | 0.71 |
| EMERY 6717 | 0.91 | 0.46 |
| Di-n-Butyl Phthalate | 8.75 | 4.47 |
| Acetic Acid | - | 5.0 |

Three hundred and seventy-nine (379) liters (one hundred gallons) of the above aqueous sizing composition was prepared according to the following procedure. EPON 880, PLURONIC™ F-108, IGEPAL CA-630 and di-n-butyl phthalate were combined in the amounts set forth above and heated to about 60°C to about 71°C (about 140°F to about 160°F) with thorough mixing. When the desired temperature was obtained, high shear mixing was commenced using an Eppenbach mixer. Hot water of about 49°C to about 60°C (about 120°F to about 140°F) in about a 2:1 volumetric ratio of water to mixture was slowly added to the mixture to emulsify the epoxy resin. The A-174, A-187 and A-1100 silanes were hydrolyzed sequentially in water acidified with acetic acid at a ratio of about 1:10 silane to water by weight and added to the main mixture. To this mixture was added 3.8 liters (1 gallon) of hot water of about 49°C to about 60°C (about 120°F to about 140°F) premixed with EMERY 6717 and 75.7 liters (20 gallons) of water premixed with EPI-REZ CMD W60-5520. The resulting aqueous sizing composition had a pH of about 4.5 to about 5.5 weight percent solids.

The sizing composition was applied to K-17.3 glass fiber strands after conventional cooling and thermal conditioning by air and water sprays using a conventional roller-type applicator. Each forming package was dried at a temperature of about 104°C to about 149°C (about 220°F to about 300°F) for about 10-13 hours to form glass strand having about 0.3 to about 2.0 weight percent of dried sizing thereon. After drying, the forming packages were mounted on a creel and transformed into roving.

Pultruded composites were prepared using an isophthalic polyester resin mix and an epoxy resin formulation, each described below, with the required number of tows of roving having the sizing composition of the present invention applied thereto. The components of the isophthalic polyester resin mix are set forth in Table 2 and the components of the epoxy resin formulation are set forth in Table 3.

**TABLE 2**

| COMPONENT | WEIGHT OF COMPONENT (GRAMS) |
|---|---|
| AROPOL 2036 | 10,000 |
| ZELEC UN mold release | 100 |
| ASP® 400P clay | 1800 |
| Benzoyl Peroxide initiator | 50 |
| PERCADOX 16N initiator | 50 |
| t-Butyl Perbenzoate initiator | 50 |
| Styrene | 50 |

AROPOL 2036 polyester resin formulation (an isophthalic polyester resin) is commercially available from Ashland Chemical Inc. of Columbus, Ohio. ZELEC UN mold release is commercially available from E.I. du Pont de Nemours & Co. of Wilmington, Delaware. PERCADOX 16N is a peroxycarbonate initiator commercially available from AKZO Chemical Inc. of Dobbs Ferry, New York.

**TABLE 3**

| COMPONENT | WEIGHT OF COMPONENT (GRAMS) |
|---|---|
| EPON Resin 9310 | 11,000 |
| EPON Curing Agent 9360 | 3630 |
| Accelerator 537 | 73.7 |
| INTEL 1850HT mold release | 73.7 |
| ASP® 400P clay | 2200 |

EPON 9310 is an epoxy resin which is commercially available from Shell Chemical. EPON curing agent 9360, also commercially available from Shell, is a mixed aromatic amine system modified with a reactive monomer. Accelerator 537 is a cure accelerant commercially available from Shell Chemical. INTEL 1850HT mold release is commercially available from Axel Plastics Research Laboratories.

The processing parameters for preparing the pultruded composites are set forth in Table 4.

**TABLE 4**

| PROCESSING PARAMETER | POLYESTER FORMULATION | EPOXY FORMULATION |
|---|---|---|
| TOWS OF 113 YIELD | 12 | 14 |
| GLASS CONTENT (WT. %) | 70-72 | 74-76 |
| FIRST PLATEN TEMPERATURE °C (°F) | 135 (275) | 199 (390) |
| SECOND PLATEN TEMPERATURE °C (°F) | 149 (300) | 210 (410) |
| PULL SPEED cm/min (INCHES/MIN) | 46 (18) | 30 (12) |

Pultruded composites using the polyester formulation were evaluated to determine in-plane shear strength according to ASTM D-3846, short beam shear according to ASTM D-2344, flexural shear strength and flexural modulus according to ASTM Method D-790. The results of each of these tests are set forth in Table 5.

**TABLE 5**

| GLASS CONTENT (WEIGHT PERCENT) | IN-PLANE SHEAR STRENGTH (ksi) | SHORT BEAM SHEAR STRENGTH (ksi) | FLEXURAL SHEAR STRENGTH (ksi) | FLEXURAL MODULUS (ksi) |
|---|---|---|---|---|
| 68.4 | 7.61 | 8.24 | 153.4 | 5986 |
| 72.0 | 6.87 | 7.99 | 160.6 | 6489 |
| 75.2 | 6.66 | 7.47 | 164.1 | 6660 |

Pultruded composites using (1) glass fibers having the sizing composition of the present invention applied thereto (Sample A) or (2) the commercially available 712 and 764 roving products of PPG Industries, Inc. of Pittsburgh, Pennsylvania (Samples B and C, respectively) in the above polyester and epoxy formulations were evaluated to determine average in-plane shear strength according to ASTM D-3846 before and after being subjected continuously for 48 hours to boiling water. The glass content for each of the samples using the polyester formulation was 70-72 weight percent. The glass content for each of the samples using the epoxy formulation was 76-77 weight percent. The average values of in-plane shear strength (derived from multiple runs) are presented in Table 6 for samples using the polyester formulation and Table 7 for samples using the epoxy formulation.

**TABLE 6**

| SAMPLE | DRY IN-PLANE SHEAR STRENGTH (ksi) | WET IN-PLANE SHEAR STRENGTH (ksi) |
|---|---|---|
| A | 8.2 | 5.6 |
| B | 5.5 | 3.9 |
| C | 3.6 | 2.5 |

**TABLE 7**

| SAMPLE | DRY IN-PLANE SHEAR STRENGTH (ksi) | WET IN-PLANE SHEAR STRENGTH (ksi) |
|---|---|---|
| A | 8.5 | 8.1 |
| B | 8.6 | 8.1 |
| C | 7.5 | 7.0 |

As shown in Tables 5, 6 and 7, the pultruded composites prepared using glass fibers coated with the sizing composition of the present invention exhibit high in-plane, short beam and flexural shear strength, as well as high flexural modulus. The pultruded composites formed using coated glass fibers of the present invention in the polyester formulation have superior dry and wet in-plane shear strength to those composites prepared using conventional coated glass fibers, as shown in Table 6, and comparable performance in the epoxy formulation, as shown in Table 7.

The aqueous sizing composition of the present invention produces glass fiber strands having high wet-out performance to produce composites having good clarity and high strength when incorporated as reinforcements for thermosetting polymers.

It will be appreciated by those skilled in the art that changes could be made to the embodiment described above without departing from the broad inventive concept thereof. It is understood, therefore, that this invention is not limited to the particular embodiment disclosed, but it is intended to cover modifications which are within the scope of the invention, as defined by the appended claims.

## Claims

1. An aqueous sizing composition for at least one glass fiber for use in reinforcing a thermosetting polymer, the composition comprising:
(a) a non-ionic urethane-modified epoxy thermosetting copolymer;
(b) a water soluble, dispersible or emulsifiable epoxy film-forming polymer;
(c) an emulsifying agent;
(d) an organo functional silane coupling agent;
(e) a fiber lubricant; and
(f) water in an amount sufficient for application of the sizing composition to at least one glass fiber.

2. The aqueous sizing composition according to claim 1, wherein the urethane-modified epoxy thermosetting copolymer is present in an aqueous emulsion.

3. The aqueous sizing composition according to claim 1, wherein the urethane-modified epoxy thermosetting copolymer has an epoxide equivalent weight of about 175 to about 760.

4. The aqueous sizing composition according to claim 1, wherein the urethane-modified epoxy thermosetting copolymer is about 10 to about 60 weight percent of the sizing composition on a non-aqueous basis.

5. The aqueous sizing composition according to claim 1, wherein the epoxy film-forming polymer is a reaction product of a halohydrin and a hydroxyl compound.

6. The aqueous sizing composition according to claim 5, wherein the halohydrin is epihalohydrin, preferably epichlorohydrin.

7. The aqueous sizing composition according to claim 5, wherein the hydroxyl compound is selected from the group consisting of polyhydric phenols and polyhydroxy alcohols.

8. The aqueous sizing composition according to claim 5, wherein the epoxy film-forming polymer is selected from the group consisting of the reaction product of an epihalohydrin and a hydroxyl compound, epoxy resin formed from an aliphatic glycidyl ether and an epoxy resin formed from monoepoxy compounds.

9. The aqueous sizing composition according to claim 1, wherein the epoxy film-forming polymer is about 10 to about 55 weight percent of the sizing composition on a non-aqueous basis.

10. The aqueous sizing composition according to claim 1, wherein the ratio on a non-aqueous basis of non-ionic urethane-modified epoxy thermosetting copolymer to epoxy film-forming polymer is about 30:70 to about 80:20 by weight.

11. The aqueous sizing composition according to claim 1, wherein the emulsifying agent is selected from the group consisting of a polyoxyalkylene block copolymer, an ethoxylated alkyl phenol, a polyoxyethylated vegetable oil and mixtures thereof.

12. The aqueous sizing composition according to claim 11, wherein the ratio of the polyoxyalkylene block copolymer to the ethoxylated alkyl phenol is about 1:1 to about 4:1 by weight.

13. The aqueous sizing composition according to claim 1, wherein the emulsifying agent comprises about 5 to about 25 weight percent of the sizing composition on a non-aqueous basis.

14. The aqueous sizing composition according to claim 1, wherein the organo functional silane coupling agent is selected from the group consisting of gamma-glycidoxypropyltrimethoxysilane, gamma-methacryloxypropyltrimethoxysilane, gamma-aminopropyltriethoxysilane and mixtures thereof, and the fiber lubricant is selected from the group consisting of an amine salt of a fatty acid, alkyl imidazoline derivative, acid solubilized fatty acid amide and acid solubilized polyunsaturated fatty acid amide.

15. The aqueous sizing composition according to claim 1, wherein the organo functional silane coupling agent comprises about 5 to about 25 weight percent of the sizing composition on a non-aqueous basis.

16. The aqueous sizing composition according to claim 1, wherein the fiber lubricant is about 0.05 to about 0.5 weight percent of the sizing composition on a non-aqueous basis.

17. The aqueous sizing composition according to claim 1, wherein the aqueous sizing composition has a weight percentage of solids of about 1 to about 10.

18. The aqueous sizing composition according to claim 1, further comprising an organic acid to give the aqueous sizing composition a pH of about 3 to about 5.5.

19. The aqueous sizing composition according to claim 1, further comprising a plasticizer selected from the group consisting of a polyethylene glycol, a phthalate, a trimellitate and an adipate.

20. The aqueous sizing composition according to claim 19, wherein the plasticizer is up to about 8 weight percent of the sizing composition on a non-aqueous basis.

21. An aqueous sizing composition for at least one glass fiber for use in reinforcing a thermosetting polymer, the composition comprising: (a) a non-ionic urethane-modified epoxy thermosetting copolymer; (b) a water soluble, dispersible or emulsifiable epoxy film-forming polymer, wherein the ratio on a non-aqueous basis of the urethane-modified epoxy thermosetting copolymer to the epoxy film-forming polymer is about 30:70 to about 80:20 by weight; (c) about 5 to about 25 weight percent on a non-aqueous basis of an emulsifying agent; (d) about 5 to about 25 weight percent on a non-aqueous basis of at least one organo functional silane coupling agent; (e) up to about 8 weight percent on a non-aqueous basis of a plasticizer; (f) about 0.05 to about 0.5 weight percent on a non-aqueous basis of a fiber lubricant; and (g) water in an amount sufficient to give the aqueous sizing composition a weight percentage of solids of about 1 to about 10.

22. A glass fiber having the dried residue of the sizing composition of claim 1.

23. A glass fiber reinforced polymeric article having the glass fiber of claim 22.

24. The glass fiber reinforced polymeric article according to claim 23, wherein the thermosetting polymer which is reinforced is selected from the group consisting of a polyester, vinyl ester and epoxy resin.

25. A method of making a reinforcement for a thermosetting polymer, the reinforcement having improved strength, comprising: (a) applying an aqueous sizing composition to at least a portion of a surface of each of a plurality of glass fibers, the aqueous sizing composition comprising:
(1) a non-ionic urethane-modified epoxy thermosetting copolymer;
(2) a water soluble, dispersible or emulsifiable epoxy film-forming polymer;
(3) an emulsifying agent;
(4) an organo functional silane coupling agent;
(5) a fiber lubricant; and
(6) water in an amount sufficient for application of the sizing composition to at least one glass fiber.

## Patentansprüche

1. Wäßrige Schlichtenzusammensetzung für wenigstens eine Glasfaser für die Verwendung zur Verstärkung eines wärmehärtbaren Polymers, wobei die Zusammensetzung enthält:
(a) ein nichtionisches urethanmodifiziertes wärmehärtbares Epoxycopolymer,
(b) ein wasserlösliches dispergierbares oder emulgierbares filmbildendes Epoxypolymer,
(c) einen Emulgator,
(d) einen organofunktionellen Silanhaftvermittler,
(e) ein Fasergleitmittel und
(f) Wasser in einer Menge, die für das Aufbringen der Schlichtenzusammensetzung auf wenigstens eine Glasfaser ausreichend ist.

2. Wäßrige Schlichtenzusammensetzung nach Anspruch 1, wobei das urethanmodifizierte wärmehärtbare Epoxycopolymer in einer wäßrigen Emulsion vorliegt.

3. Wäßrige Schlichtenzusammensetzung nach Anspruch 1, wobei das urethanmodifizierte wärmehärtbare Epoxycopolymer ein Epoxidäquivalentgewicht von ungefähr 175 bis ungefähr 760 aufweist.

4. Wäßrige Schlichtenzusammensetzung nach Anspruch 1, wobei das urethanmodifizierte wärmehärtbare Epoxycopolymer ungefähr 10 bis ungefähr 60 Gew.-% der Schlichtenzusammensetzung auf Basis nichtwäßriger Bestandteile ausmacht.

5. Wäßrige Schlichtenzusammensetzung nach Anspruch 1, wobei das filmbildende Epoxypolymer ein Reaktionsprodukt eines Halohydrins und einer Hydroxylverbindung ist.

6. Wäßrige Schlichtenzusammensetzung nach Anspruch 5, wobei das Halohydrin Epihalohydrin, vorzugsweise Epichlorhydrin, ist.

7. Wäßrige Schlichtenzusammensetzung nach Anspruch 5, wobei die Hydroxylverbindung ausgewählt ist aus der Gruppe, bestehend aus Polyhydroxyphenolen und Polyhydroxyalkoholen.

8. Wäßrige Schlichtenzusammensetzung nach Anspruch 5, wobei das filmbildende Epoxypolymer ausgewählt ist aus der Gruppe, bestehend aus dem Reaktionsprodukt eines Epihalohydrins und einer Hydroxylverbindung, einem Epoxyharz, das aus einem aliphatischen Glycidylether gebildet wird, und einem Epoxyharz, das aus Monoepoxyverbindungen gebildet ist.

9. Wäßrige Schlichtenzusammensetzung nach Anspruch 1, wobei das filmbildende Epoxypolymer ungefähr 10 bis ungefähr 55 Gew.-% der Schlichtenzusammensetzung auf Basis nichtwäßriger Bestandteile ausmacht.

10. Wäßrige Schlichtenzusammensetzung nach Anspruch 1, wobei das Gewichtsverhältnis von nichtionischem urethanmodifiziertem wärmehärtbarem Epoxycopolymer zu filmbildendem Epoxypolymer ungefähr 30:70 bis ungefähr 80:20 auf Basis nichtwäßriger Bestandteile beträgt.

11. Wäßrige Schlichtenzusammensetzung nach Anspruch 1, wobei der Emulgator ausgewählt ist aus der Gruppe bestehend aus einem Polyoxyalkylenblockcopolymer, einem ethoxylierten Alkylphenol, einem polyoxyethylierten Pflanzenöl und Mischungen davon.

12. Wäßrige Schlichtenzusammensetzung nach Anspruch 11, wobei das Gewichtsverhältnis von Polyoxyalkylenblockcopolymer zu dem ethoxylierten Alkylphenol ungefähr 1:1 bis ungefähr 4:1 beträgt.

13. Wäßrige Schlichtenzusammensetzung nach Anspruch 1, wobei der Emulgator ungefähr 5 bis ungefähr 25 Gew.-% der Schlichtenzusammensetzung auf Basis nichtwäßriger Bestandteile ausmacht.

14. Wäßrige Schlichtenzusammensetzung nach Anspruch 1, wobei der organofunktionelle Silanhaftvermittler ausgewählt ist aus der Gruppe bestehend aus γ-Glycidoxypropyltrimethoxysilan, γ-Methacryloxypropyltrimethoxysilan, γ-Aminopropyltriethoxysilan und Mischungen davon und das Fasergleitmittel ausgewählt aus der Gruppe bestehend aus einem Aminsalz einer Fettsäure, Alkylimidazolinderivaten, durch Säure löslich gemachten Fettsäureamiden und durch Säure löslich gemachten mehrfach ungesättigten Fettsäureamiden.

15. Wäßrige Schlichtenzusammensetzung nach Anspruch 1, wobei der organofunktionelle Silanhaftvermittler ungefähr 5 bis ungefähr 25 Gew.-% der Schlichtenzusammensetzung auf Basis nichtwäßriger Bestandteile ausmacht.

16. Wäßrige Schlichtenzusammensetzung nach Anspruch 1, wobei das Fasergleitmittel ungefähr 0,05 bis ungefähr 0,5 Gew.-% der Schlichtenzusammensetzung auf Basis nichtwäßriger Bestandteile ausmacht.

17. Wäßrige Schlichtenzusammensetzung nach Anspruch 1, wobei die wäßrige Schlichtenzusammensetzung einen Gewichtsprozentgehalt an Feststoffen von ungefähr 1 bis ungefähr 10 aufweist.

18. Wäßrige Schlichtenzusammensetzung nach Anspruch 1, die zusätzlich eine organische Säure enthält, um der wäßrigen Schlichtenzusammensetzung einen pH Wert von ungefähr 3 bis ungefähr 5,5 zu verleihen.

19. Wäßrige Schlichtenzusammensetzung nach Anspruch 1, die zusätzlich einen Weichmacher, ausgewählt aus der Gruppe bestehend aus Polyethylenglykol, einem Phthalat, einem Trimellitat und einem Adipat, enthält.

20. Wäßrige Schlichtenzusammensetzung nach Anspruch 19, wobei der Weichmacher bis ungefähr 8 Gew.-% der Schlichtenzusammensetzung auf Basis nichtwäßriger Bestandteile ausmacht.

21. Wäßrige Schlichtenzusammensetzung für wenigstens eine Glasfaser für die Verwendung zur Verstärkung eines wärmehärtbaren Polymers, wobei die Zusammensetzung enthält:
(a) ein nichtionisches urethanmodifiziertes wärmehärtbares Epoxycopolymer,
(b) ein wasserlösliches dispergierbares oder emulgierbares filmbildendes Epoxypolymer, wobei das Gewichtsverhältnis von urethanmodifiziertem wärmehärtbarem Epoxycopolymer zu filmbildendem Epoxypolymer auf Basis nichtwäßriger Bestandteile ungefähr 30:70 bis ungefähr 80:20 beträgt,
(c) ungefähr 5 bis ungefähr 25 Gew.-% auf Basis nichtwäßriger Bestandteile eines Emulgators,
(d) ungefähr 5 bis ungefähr 25 Gew.-% auf Basis nichtwäßriger Bestandteile wenigstens eines organofunktionellen Silanhaftvermittlers,
(e) bis ungefähr 8 Gew.-% auf Basis nichtwäßriger Bestandteile eines Weichmachers,
(f) ungefähr 0,05 bis ungefähr 0,5 Gew.-% auf Basis nicht-wäßriger Bestandteile eines Fasergleitmittels und
(g) Wasser in einer Menge, die ausreicht, um der wäßrigen Schlichtenzusammensetzung einen Gewichtsprozentanteil an Feststoffen von ungefähr 1 bis ungefähr 10 zu verleihen.

22. Glasfaser, die den getrockneten Rückstand der Schlichtenzusammensetzung nach Anspruch 1 aufweist.

23. Gegenstand aus glasfaserverstärktem Kunststoff mit der Glasfaser nach Anspruch 22.

24. Gegenstand aus glasfaserverstärktem Kunststoff nach Anspruch 23, wobei das wärmehärtbare Polymer, das verstärkt ist, ausgewählt ist aus der Gruppe bestehend aus einem Polyester, Vinylester und Epoxyharz.

25. Verfahren zur Erzeugung einer Verstärkung für ein wärmehärtbares Polymer, wobei die Verstärkung eine verbesserte Festigkeit aufweist, umfassend:
(a) Aufbringen einer wäßrigen Schlichtenzusammensetzung auf wenigstens einen Teil einer Oberfläche jeder von einer Vielzahl von Glasfasern, wobei die wäßrige Schlichtenzusammensetzung enthält:
(1) ein nichtionisches urethanmodifiziertes wärmehärtbares Epoxycopolymer,
(2) ein wasserlösliches dispergierbares oder emulgierbares filmbildendes Epoxypolymer,
(3) einen Emulgator,
(4) einen organofunktionellen Silanhaftvermittler,
(5) ein Fasergleitmittel und
(6) Wasser in einer Menge, die für das Aufbringen der Schlichtenzusammensetzung auf wenigstens eine Glasfaser ausreichend ist.

## Revendications

1. Composition d'ensimage aqueuse pour au moins une fibre de verre, à utiliser en vue du renforcement d'un polymère thermodurcissable, laquelle composition comprend :
(a) un copolymère du type époxy thermodurcissable et modifié par modifié par un uréthanne, non ionique,
(b) un polymère filmogène du type époxy, émulsifiable, dispersible, ou soluble dans l'eau,
(c) un agent émulsif,
(d) un agent de couplage du type silane organofonctionnel,
(e) un lubrifiant pour fibres et
(f) de l'eau en une proportion qui suffit à l'application de la composition d'ensimage sur au moins une fibre de verre.

2. Composition d'ensimage aqueuse suivant la revendication 1, caractérisée en ce que le copolymère thermodurcissable du type époxy modifié par un uréthanne est présent sous forme d'une émulsion aqueuse.

3. Composition d'ensimage aqueuse suivant la revendication 1, caractérisée en ce que le copolymère thermodurcissable du type époxy modifié par un uréthanne possède un équivalent-poids d'époxyde d'environ 175 à environ 760.

4. Composition d'ensimage aqueuse suivant la revendication 1, caractérisée en ce que le copolymère thermodurcissable du type époxy modifié par un uréthanne représente d'environ 10 à environ 60% en poids de la composition d'ensimage sur une base non aqueuse.

5. Composition d'ensimage aqueuse suivant la revendication 1, caractérisée en ce que le copolymère filmogène du type époxy est le produit de la réaction d'une halohydrine et d'un composé hydroxylé.

6. Composition d'ensimage aqueuse suivant la revendication 5, caractérisée en ce que l'halohydrine est une épihalohydrine, de préférence, l'épichlorhydrine.

7. Composition d'ensimage aqueuse suivant la revendication 5, caractérisée en ce que le composé hydroxylé est choisi dans le groupe formé de phénols polyhydroxylés et d'alcools polyhydroxylés.

8. Composition d'ensimage aqueuse suivant la revendication 5, caractérisée en ce que l'on choisit le polymère filmogène dans le groupe formé du produit de la réaction d'une épihalohydrine et d'un composé hydroxylé, une résine époxy formée d'un éther glycidylique aliphatique et une résine époxy formée de composés monoépoxydés.

9. Composition d'ensimage aqueuse suivant la revendication 1, caractérisée en ce que le polymère filmogène du type époxy constitue d'environ 10 à environ 55% en poids de la composition d'ensimage sur une base non aqueuse.

10. Composition d'ensimage aqueuse suivant la revendication 1, caractérisée en ce que le rapport, sur une base non aqueuse du type époxy modifié par un uréthanne non ionique au polymère filmogène du type époxy varie d'environ 30:70 à environ 80:20, en poids.

11. Composition d'ensimage aqueuse suivant la revendication 1, caractérisée en ce que l'on choisit l'agent émulsif dans le groupe formé d'un copolymère séquencé polyoxyalkylénique, d'un alkyphénol éthoxylé, d'une huile végétale polyoxyéthylée et de leurs mélanges.

12. Composition d'ensimage aqueuse suivant la revendication 11, caractérisée en ce que le rapport du copolymère séquencé polyoxyalkylénique à l'alkyphénol éthoxylé varie d'environ 1:1 à environ 4:1, en poids.

13. Composition d'ensimage aqueuse suivant la revendication 1, caractérisée en ce que l'agent émulsif constitue d'environ 5 à environ 25% en poids de la composition d'ensimage, sur une base non aqueuse.

14. Composition d'ensimage aqueuse suivant la revendication 1, caractérisée en ce que l'on choisit l'agent de couplage du type silane organofonctionnel dans le groupe formé du gamma-glycidoxypropyltriméthoxysilane, du gamma-méthacryloxypropyltriméthoxysilane, du gamma-aminopropyltriéthoxysilane et de leurs mélanges et on choisit le lubrifiant pour fibres dans le groupe constitué d'un sel d'amine d'un acide gras, d'un dérivé d'alkylimidazoline, d'un amide d'acide gras solubilisé par un acide et d'un amide d'acide gras poly-insaturé solubilisé par un acide.

15. Composition d'ensimage aqueuse suivant la revendication 1, caractérisée en ce que l'agent de couplage du type silane organofonctionnel constitue d'environ 5 à environ 25% en poids de la composition d'ensimage, sur une base non aqueuse.

16. Composition d'ensimage aqueuse suivant la revendication 1, caractérisée en ce que le lubrifiant pour fibres constitue d'environ 0,05 à environ 0,5% en poids de la composition d'ensimage, sur une base non aqueuse.

17. Composition d'ensimage aqueuse suivant la revendication 1, caractérisée en ce que la composition d'ensimage aqueuse possède un pourcentage pondéral de solides qui varie d'environ 1 à environ 10.

18. Composition d'ensimage aqueuse suivant la revendication 1, caractérisée en ce qu'elle comprend en outre un acide organique qui confère à la composition d'ensimage aqueuse un pH d'environ 3 à environ 5,5.

19. Composition d'ensimage aqueuse suivant la revendication 1, caractérisée en ce qu'elle comprend en outre un plastifiant choisi dans le groupe formé par un polyéthylèneglycol, un phtalate, un trimellitate et un adipate.

20. Composition d'ensimage aqueuse suivant la revendication 19, caractérisée en ce que le plastifiant constitue jusqu'à environ 8% en poids de la composition d'ensimage, sur une base non aqueuse.

21. Composition d'ensimage aqueuse pour au moins une fibre à utiliser en vue du renforcement d'un polymère thermodurcissable, laquelle composition comprend : (a) un copolymère thermodurcissable du type époxy modifié par un uréthanne, non ionique, (b) un polymère filmogène du type époxy, émulsifiable, dispersible, ou soluble dans l'eau, où le rapport, sur une base non aqueuse, du copolymère thermodurcissable du type époxy modifié par un uréthanne au polymère filmogène du type époxy varie d'environ 30:70 à environ 80:20, en poids, (c) environ 5 à environ 25% en poids, sur une base non aqueuse, d'un agent émulsif, (d) environ 5 à environ 25% en poids, sur une base non aqueuse, d'au moins un agent de couplage du type silane organofonctionnel, (e) jusqu'à environ 8% en poids, sur une base non aqueuse, d'un plastifiant, (f) environ 0,05 à environ 0,5% en poids, sur une base non aqueuse, d'un lubrifiant pour fibres et (g) de l'eau en une proportion qui suffit à conférer à la composition d'ensimage aqueuse un pourcentage pondéral de solides d'environ 1 à environ 10.

22. Fibre de verre qui comporte le résidu séché de la composition d'ensimage suivant la revendication 1.

23. Article polymérique renforcé par une fibre de verre, qui comporte la fibre de verre de la revendication 22.

24. Article polymérique renforcé par une fibre de verre suivant la revendication 23, caractérisé en ce que le polymère thermodurcissable qui est renforcé est choisi dans le groupe formé par un polyester, un ester vinylique et une résine époxy.

25. Procédé de préparation d'un renforcement pour un polymère thermodurcissable, le renforcement possédant une résistance améliorée, caractérisé en ce que : (a) on applique une composition d'ensimage aqueuse sur au moins une partie d'une surface de chacune d'une multiplicité de fibres de verre, la composition d'ensimage aqueuse comprenant:
(1) un copolymère du type époxy thermodurcissable et modifié par modifié par un uréthanne, non ionique,
(2) un polymère filmogène du type époxy, émulsifiable, dispersible, ou soluble dans l'eau,
(3) un agent émulsif,
(4) un agent de couplage du type silane organofonctionnel,
(5) un lubrifiant pour fibres et
(6) de l'eau en une proportion qui suffit à l'application de la composition d'ensimage sur au moins une fibre de verre.
